# NEUE EUROPÄISCHE PATENTSCHRIFT

(11) **EP 0 387 418 B2**
(45) Veröffentlichungstag und Bekanntmachung des Hinweises auf die Entscheidung über den Einspruch: **24.07.1996**
(45) Hinweis auf die Patenterteilung: 14.04.1993
(21) Anmeldenummer: 89123369.4
(22) Anmeldetag: 18.12.1989
(51) Int. Cl.: C09D 163/00, C08G 59/10, C08G 59/50, C08G 59/18

(54) **Härtungsmittel für Epoxidverbindungen, ihre Herstellung und Verwendung**
Curing agent for epoxy-compounds, their production and use
Durcisseur pour composés époxy, leur préparation et utilisation

(30) Priorität: 13.03.1989 DE 3908085
(43) Veröffentlichungstag der Anmeldung: 19.09.1990
(73) Patentinhaber: RÜTGERSWERKE AKTIENGESELLSCHAFT, 60326 Frankfurt (DE)
(72) Erfinder: Hansen, Achim, Dr., D-4000 Düsseldorf 1 (DE); Mathes, Alfred, Dr., D-4100 Duisburg 74 (DE); Zehrfeld, Jürgen, Dr., D-4223 Voerde (DE)

(56) Entgegenhaltungen:
- EP-A- 0 000 605
- EP-A- 0 109 173
- EP-A- 0 200 397
- CH-A- 482 762
- GB-A- 2 017 711
- US-A- 3 496 138

## Beschreibung

Die Erfindung betrifft neue Härtungsmittel für Epoxidverbindungen, insbesondere Epoxidharze, die bevorzugt zur Herstellung wässriger Epoxidharz-Härter-Emulsionen bzw. -dispersionen Verwendung finden.

Aus EP-B 0 000 605 sind Härtungsmittel für wässrige Epoxidharzdispersionen bekannt, die durch Umsetzung von Additionsprodukten aus Polyalkylenpolyetherpolyolen und wasserunlöslichen Polyepoxidverbindungen mit Polyaminen hergestellt werden, wobei an die reaktiven Gruppen der Polyamine noch zur Addition befähigte, ungesättigte Verbindungen addiert sind.

Diese Härter ermöglichen die Herstellung hochwertiger Epoxidharzdispersionen, die als Beschichtungs- oder Überzugmittel sowie als Zementusatzmittel mit guten Gebrauchseigenschaften eingesetzt werden. Sie weisen allerdings eine Reihe von Nachteilen auf, wie z. B. hohe Viskositäten, ungünstige Reaktivitäten und eine dunkle Farbe. Die Ursache hierfür liegt im wesentlichen in der Art der verwendeten Stoffe und des daraus sich ergebenden Reaktionsweges zum Aufbau der Verbindungen mit Emulgatoreneigenschaften.

So bedarf die Umsetzung von Polyalkylenpolyetherpolyolen mit Diepoxidverbindungen einer BF₃-Amin-Katalyse und ist zudem nur bei Temperaturen oberhalb 160 °C durchführbar. Hierbei kommt es trotz der Verwendung eines relativ hohen Überschusses an Diepoxidverbindung durch Nebenreaktionen zu Produkten hoher Viskosität und für die Reaktivität ungünstigen Molekulargewichtsverteilungen. Außerdem enthält das Reaktionsprodukt aus Polyalkylenpolyetherpolyolen und Diepoxidverbindungen mit einer technisch erwünschten relativ niedrigen Viskosität, bedingt durch das erforderliche Molverhältnis einen hohen Anteil an nicht umgesetzten Diepoxidverbindungen, was sich wegen der Folgereaktion mit Aminen oftmals nachteilig auf die Emulgatoreigenschaften des erhaltenen Endprodukts auswirkt. Zudem kommt es bedingt durch Reaktionstemperaturen von 160 °C zu einer Dunkelfärbung des Reaktionsproduktes.

Es ist daher Aufgabe der Erfindung, wasseremulgierende Härtungsmittel für Epoxidverbindungen bereitzustellen, die ein stark verbessertes Eigenschaftsprofil besitzen, die insbesondere bei niedriger Viskosität und heller Farbe eine verbesserte Emulgierwirkung zeigen.

Die Lösung der Aufgabe erfolgt durch Härtungsmittel und Härtermischungen gemäß der Ansprüche 1 bis 6 und durch Verfahren zu ihrer Herstellung gemäß der Ansprüche 7 bis 12.

Die Härtungsmittel finden ggf. gemeinsam mit weiteren Epoxidharzhärtern und zusammen mit einer oder mehreren Epoxidverbindungen und Wasser als wasseremulgierbare Epoxid-Bindemittel Verwendung zur Herstellung von Beschichtungen, Überzügen oder als Zusatzmittel für hydraulische Bindemittel gemäß der Ansprüche 13 und 14.

Darüber hinaus eigenen sich die Härtungsmittel bzw. Härtermischungen zusammen mit einer oder mehreren Epoxidverbindungen zur Herstellung von Dicht- und Klebstoffen gemäß Anspruch 15, sowie zur Herstellung von flexiblen Formteilen, Flächengebilden oder Laminaten gemäß Anspruch 16.

Es wurde gefunden, daß durch Umsetzung von Polyalkylenpolyetheraminen mit einem Überschuß an Di- oder Polyepoxidverbindungen und weitere Umsetzung der so erhaltenen epoxidendständigen Zwischenprodukte mit Aminen, helle, aminoendständige Produkte erhalten werden, die eine verhältnismäßig niedrige Viskosität, eine ausgezeichnete Lagerstabilität und hervorragende Härtungseigenschaften besitzen. Die Produkte sind reaktive Härtungsmittel für Epoxidharze mit gezielt einstellbaren, gleichbleibenden Härtungseigenschaften, die sich über einen weiten Temperaturbereich herab bis ca. 0 °C als auch bei erhöhten Temperaturen gezielt einsetzen lassen.

Die erhaltenen gehärteten Produkte zeichnen sich durch gute mechanische Eigenschaften, hervorragende Chemikalien- und Alterungsbeständigkeit und insbesondere durch eine gute Flexibilisierungswirkung aus.

Überraschenderweise werden mit diesen Produkten zudem sehr gute Verträglichkeiten in den Formulierungen erreicht und Entmischungen während der Lagerung der Härtungsmittel werden vermieden. Darüber hinaus sind die erfindungsgemäß hergestellten Härtungsmittel , die aus bei Raumtemperatur festen Polyalkylenpolyetheraminen hergestellt sind, in der Mehrzahl flüssig, was erhebliche Vorteile in der Applikation bietet.

Nach US-A4 421 906 hat man versucht, diese Nachteile zu beheben, indem man die flexibilisierende Komponente in das Harz eingebaut hat: Es werden Addukte aus Polyalkylenpolyetheraminen und Bisphenol-A-Di-glycidyl-ethern hergestellt, die mit Polyaminoamiden gehärtet werden. Die Addukte aus Epoxidverbindungen und Polyalkylenpolyetheraminen haben allerdings nur eine begrenzte Lagerstabilität und sind somit für die praktische Anwendung wenig geeignet.

Die erfindungsgemäßen Härtungsmittel werden durch Umsetzung von Polyalkylenpolyetherpolyaminen mit Epoxidverbindungen, die mehr als eine Epoxidgruppe je Molekül enthalten, und anschließender Umsetzung des epoxidendständigen Reaktionsproduktes mit Polyaminen erhalten.

Die Umsetzung der Polyalkylenpolyetherpolyamine mit Epoxidverbindungen verläuft bei niedriger Temperatur, ohne Katalysator und mit hoher Selektivität. Es werden selbst bei einem geringen molaren Überschuß an Epoxidverbindung Produkte mit vergleichsweise niedrigen Viskositäten und enger Molekulargewichtsverteilung sowie niedriger Molmasse erhalten. Zudem enthalten diese Produkte nur sehr geringe bis gar keine Anteile an freien Epoxidverbindungen, was sich günstig auf die Endeigenschaften der Härtungsmittel auswirkt. Darüberhinaus übt das durch Reaktion von Polyalkylenpolyetherpolyaminen und Epoxidverbindungen entstehende tertiäre Amin positive katalytische Einflüsse auf den späteren Härtungsverlauf aus. Die Herstellung der Härtungsmittel bei niedrigeren Temperaturen führt zudem zu hellen Produkten.

Die erfindungsgemäß hergestellten aminendständigen Härtungsmittel werden, gegebenenfalls mit zusätzlichen reaktiven Härterkomponenten, handelsüblichen Zusatzmitteln wie z. B. Verlaufsmittel, Entschäumer, Entlüftungsmittel etc., sowie weiteren als Zusatzmittel für Härtungsmittel für Epoxidharze bekannten Stoffen wie z. B. Lösungsmittel, Beschleuniger etc. mit Epoxidverbindungen, insbesondere Epoxidharzen mit mindestens zwei Epoxidgruppen pro Moleküleinheit in äquimolarem Verhältnis von Amino- und Epoxidgruppen vermischt und gegebenenfalls nach Zufügen von Wasser unter intensivem Rühren dispergiert oder emulgiert, als Emulsion oder Dispersion appliziert und zur Aushärtung gebracht.

Die Aushärtung erfolgt je nach den Erfordernissen bei niedrigen Temperaturen bis herab zu ca. 0 °C innerhalb 3 bis 72 Stunden nach dem Vermischen oder bei erhöhten Temperaturen.

Die erfindungsgemäßen Härtungsmittel können darüberhinaus in an sich bekannter Weise mit zusätzlichen üblichen Aminhärtern wie z. B. aliphatischen und/oder cycloaliphatischen Polyaminen, aminendständigen Polyalkylethern, primären längerkettigen Monoaminen oder aminendständigen Butadien-Acrylnitril-Copolymerisaten zu Härtermischungen für Epoxidverbindungen kombiniert werden. Auch derartige Härtermischungen können in Wasser emulgiert werden.

Die Herstellung der erfindungsgemäßen Härtungsmittel erfolgt in 2 Reaktionsschritten aus an sich bekannten Vorprodukten:
(1) Umsetzung von Polyalkylenpolyetheraminen mit Di- und/oder Polyepoxidverbindungen, gegebenenfalls noch in Abmischung mit Monoepoxidverbindungen.
(2) Umsetzung des Reaktionsproduktes aus (1) mit Polyaminen, mit gegebenenfalls anschließender chemischer Modifizierung.

Der erste Reaktionsschritt erfolgt durch Vermischen der Reaktionspartner miteinander bei Temperaturen im Bereich von 20-120 °C, insbesondere von 50-90 °C und halten des Reaktionsgemisches für mehrere Stunden (1-5 h) bei einer Temperatur in diesem Bereich.

Als Aminkomponenten für den ersten Reaktionsschritt dienen handelsübliche Polyalkylenpolyethermonoamine undloder -diamine und/oder -polyamine.

Diese Polyalkylenpolyetheramine haben mittlere Molekulargewichte von 148 bis 5.000, vorzugsweise zwischen 400 und 2.000.

Die Basis der Polyalkylpolyethereinheiten können Ethyl-, Propyl- und Butyleinheiten sein. Es kann sich hierbei beispielsweise um Reaktionsprodukte von Ethylenoxid, Propylenoxid, Butylenoxid bzw. Amylenoxid mit einwertigen und/oder mehrwertigen Alkoholen oder um Polyether auf der Basis von Tetrahydrofuran handeln. Gegebenenfalls sind die Polyalkylenpolyether-Ketten Hetero- oder Blockcopolymere.

Besonders bevorzugt sind Polyalkylenpoyetheramine auf der Basis von Ethylenoxid oder Propylenoxid.

Als Epoxidkomponenten für den ersten Reaktionsschritt dienen vorwiegend Epoxidverbindungen mit mehr als einer Epoxidgruppe je Molekül. Zur Verminderung der Aminfunktionalität der Polyalkylenpolyetheramine können Epoxidverbindungen mit nur einer Epoxidgruppe je Moleküleinheit eingesetzt werden.

Es handelt sich dabei um aliphatische, araliphatische, cycloaliphatische, aromatische bzw. heteroaromatenenthaltende Verbindungen mit einer Epoxidgruppe je Molekül.

Beispiele hierfür sind Butylglycidylether, Hexylglycidylether, Phenylglycidylether, oder Kresylglycidylether. Einsetzbar sind aber auch andere Mono-Glycidylverbindungen wie Glycidylester, -amine, -thioether, -amide, -(Iso)cyanate und Aralkylenoxide.

Aus der großen Zahl der polyfunktionellen Epoxidverbindungen, die mehr als eine 1,2-Epoxidgruppe im Molekül enthalten, seien genannt: Die Epoxide mehrfach-ungesättigter Kohlenwasserstoffe (Vinylcyclohexen, Dicyclopentadien, Cyclohexadien, Cyclododecadien, Cyclododecatrien, Isopren, 1,5-Hexadien, Butadien, Polybutadiene, Divinylbenzole und dergleichen), Oligomere des Epichlorhydrins und ähnliche, Epoxidether mehrwertiger Alkohole (Ethylen-, Propylen- und Butylenglykole, Polyglykole, Thiodiglykole, Glycerin, Pentaerythrit, Sorbit, Polyvinylalkohol Polyallylalkol und ähnliche), Epoxidether mehrwertiger Phenole (Rescorcin, Hydrochinon, Bis-(4-hydroxyphenyl)-methan, Bis-(4-hydroxy-3-methylphenyl)-methan, Bis-(4-hydroxy-3,5-dibromphenyl)methan, Bis-(4-hydroxy-3,5-difluorphenyl)-methan, 1,1 Bis(4-hydroxyphenyl)-ethan, 2,2-Bis-(4-hydroxyphenyl)propan, 2,2-Bis-(4-hydroxy-3methylphenyl)propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-diphenylmethan, Bis-(4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon sowie deren Hydroxyethylether, Phenol-Formaldehyd-Kondensationsprodukte, wie Phenolalkohole, Phenolaldehydharze und ähnliche, S- und N-haltige Epoxide, (N,N'-Diglycidylanilin, N,N'-Dimethyldiglycidyl-4,4-Diaminodiphenylmethan) sowie Epoxide, welche nach üblichen Verfahren aus mehrfach ungesättigten Carbonsäuren oder einfach ungesättigten Carbonsäureestern ungesättigter Alkohole hergestellt worden sind, Glycidylestern, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon bzw. deren Derivaten und anderen) erhältlich sind.

Bevorzugte Epoxidverbindungen sind Polyphenol-Glycidylether, z. B. die Reaktionsprodukte aus Epichlorhydrin und Bisphenol A oder Bisphenol F. Derartige Epoxidharze haben ein Epoxid-Äquivalent von 160-500. Die vorstehenden polyfunktionellen Epoxidverbindungen, dieser Ausdruck schließt auch den Begriff Epoxidharz ein, können einzeln oder im Gemisch, gegebenenfalls in Gegenwart von Lösungsmitteln nach dem vorliegenden Verfahren umgesetzt werden. Sie können auch, wie bereits vorstehend erwähnt, in Gemischen mit Monoepoxyden eingesetzt werden.

Die Mengenverhältnisse Polyalkylenpolyetheraminen und Epoxidverbindungen müssen so gewählt werden, daß die entstehenden Produkte mindestens eine freie Epoxidgruppe pro Molekül enthalten, d. h. die Menge an Epoxidverbindungen mit mehr als einer Epoxidgruppe im Molekül wird so gewählt, daß das Verhältnis der gegebenenfalls nach Umsetzung mit Monoepoxidverbindungen verbliebenen, an Stickstoff gebundenen Wasserstoffatome, die zur Reaktion mit Epoxidgruppen befähigt sind, zu Epoxidgruppen von Diepoxidverbindungen bzw. Polyepoxidverbindungen im Bereich von 1 : 1,4 bis 6 liegt.

Als Aminkomponenten für den zweiten Reaktionsschritt dienen handelsübliche Monoamine, Diamine und Polyamine, die jeweils einzeln oder im Gemisch miteinander eingesetzt werden können.

Die Wahl der Amine und Gemische kann in weiten Bereichen beliebig erfolgen. Es müssen jedoch an der Umsetzung Amine mit mindestens einer primären Aminogruppe oder, bei Einsatz von sekundären Aminen, solche mit mindestens zwei sekundären Aminogruppen beteiligt sein, um zu gewährleisten, daß das gewünschte Endprodukt mindestens eine freie primäre oder sekundäre Aminogruppe pro Molekül besitzt.

Beispiele für Monoamine sind daher Butylamin, Cyclohexylamin, Anilin oder Benzylamin, während sekundäre Monoamine allenfalls im Unterschuß bezogen auf funktionelle Gruppen (Epoxidgruppen) zur Herabsetzung der Funktionalität des Vorproduktes, zur Viskositätserniedrigung oder gegebenenfalls zur Einführung katalytischer Gruppen eingesetzt werden.

Als Di- und Polyamine können aliphatische, araliphatische, cycloaliphatische, aromatische oder heterocyclische Di- und/oder Polyamine verwendet werden.

Beispiele hierfür sind:
Ethylendiamin, Diethylentriamin, 1,2-Diaminopropan, 1,3-Diaminopropan, 1,3-Diaminobutan, 1,4-Diaminobutan, 3-(n-Isopropyl-amino)propylamin, Hexapropylenheptamin, 1-Cyclohexylamino-3-aminopropan, 1,4-Diaminocyclohexan, 1,3-Diaminocyclohexan, 2,4-Diaminocyclohexan, 1,3-Di(amino-cyclo-hexyl)propan, N,N'-Diethyl-1,3-diaminopropan, N,N'-Diethyl-1,4-diaminocyclohexan, N-Aminoethylepiperazin, N-Aminopropylpiperazin, N-Aminobutylpiperazin, 1,3-Dipiperazinylpropan, 1,3-Dipiperidylpropan, 3-(2-Aminoethyl)-aminopropylamin, N,N'-bis(3-Aminopropyl)-ethylendiamin, die handelsüblichen primären aliphatischen Polyoxipropylendi- oder triamine, Phenylendiamin, 4,4'-Diamino-diphenylmethan sowie Etherdiamine wie z. B. 1,7-Diamino-4-oxa-heptan, 1,7-Di-amino-3,5-dioxa-heptan, 1,10-Diamino-4,7-dioxa-decan, 1,10-Diamino-4,7-dioxa-5-methyldecan, 1,11-Diamino-6-oxa-undecan, 1,11-Diamino-4,8-dioxaundecan, 1,11-Diamino-4,8-dioxa-5-methyl-undecan, 1,11-Diamino-4,8-dioxa-5,6-dimethyl-7-propionylundecan, 1,1 2-Diamino-4,9-dioxa-dodecan, 1,13-Diamino-4,10-dioxatridecan, 1,13-Dümino-4,7,10-trioxa-5,8-dimethyl-tridecan, 1,14-Diamino-4,11-dioxa-tetradecan, 1,14-Diamino-4,7,10-trioxatetradecan, 1,16-Diamino-4,7,10,13-tetraoxa-hexadecan, 1,20-Diamino-4,17-dioxa-eicosan und insbesondere Hexamethylendiamin, 3,3,5(3,5,5)-Trimethyl-hexamethylendiamin und 3,3'-Dimethyl-4,4'-diaminodicyclohexylmethan und insbesondere Isophorondiamin, N-Aminoethyl-piperazin, 1,2-Diaminopropan, Methyl-pentamethylendiamin, Xylylendiamin oder Mischungen dieser Amine, aber auch Polyaminoamide oder Polyalkylenpolyamine.

Zusätzlich können Verbindungen Verwendung finden, bei denen die Di- und Polyamine partiell umgesetzt sind
a) mit zur Addition befähigten, ungesättigten Verbindungen der allgemeinen Formel: 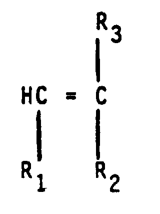 wobei
   R₁ = H, -CH₃, -C₂H₅
   R₂ = H, - CH₃
   R₃ = -CN, -COOH, -COOCH₃, -COOC₂H₅, -COOC₃H₇, -COOC₄H₉, -CONH₂, -CONHCH₃ oder -CON(CH₃)₂. Bevorzugt eingesetzt werden Umsetzungsprodukte aus Di- und Polyaminen mit zur Addition befähigten, ungesättigten Verbindungen gemäß der angegebenen Formel, bei denen R₃ = -CN, da damit Härtungsmittel entstehen, die ein besonders gutes Emulgierverhalten zeigen.
b) mit durch reduktive Aminierung der Amine durch Umsetzung mit Aldehyden bzw. Ketonen und einer sich anschließenden Hydrierung erhaltene Verbindungen.
c) mit Aldehyden bzw. Ketonen (sog. Schiffchen Basen),
d) mit Aldehyden (insbesondere Formaldehyd) und phenolischen Verbindungen (sog. Mannichbasen),
e) oder mit Addukten von Aminen mit Epoxidgruppen enthaltenden Verbindungen,
wobei diese Umsetzungsprodukte aber noch mindestens eine freie primäre oder sekundäre Aminogruppe pro Molekül enthalten müssen.

Diese genannten Umsetzungen (insbesondere Punkt a,c,e) können wahlweise vor und/oder nach dem 2. Reaktionsschritt erfolgen.

Die Menge des einzusetzenden Amines oder Amingemisches muß so bemessen sein, daß die zur Reaktion befähigten Epoxidgruppen zu den am Stickstoff befindlichen Wasserstoffatomen in einem Verhältnis von 1 : 2 bis 10 stehen.

Der zweite Reaktionsschritt erfolgt in der Weise, daß das Produkt aus dem 1. Reaktionsschritt direkt mit dem gewählten Amin oder Amingemisch vermischt und bei einer Temperatur im Bereich von 20-120 °C, insbesondere im Bereich von 50-90 °C, mehrere Stunden lang (1-5 h) behandelt wird.

Danach ist der erfindungsgemäße Härter gebrauchsfertig. Er kann entweder in der vorliegenden Form oder in Wasser emulgiert eingesetzt werden, wobei die Härtermenge so gewählt wird, daß die primären oder sekundären Aminogruppen des Härters in äquimolarem Verhältnis zu den Epoxidgruppen der zu härtenden Epoxidverbindungen stehen.

Die Erfindung wird durch die folgenden Beispiele näher erläutert:

### Beispiel 1

300 g (1,0 Val) Polyalkylenpolyethermonoamin auf Basis Propylenoxid mit einem mittleren Molekulargewicht von 600 (Jeffamine ® M 600) und 417,6 g (2,4 Val) Bisphenol-A-Diglycidylether mit einem Epoxidäquivalent von 174 werden in einem Reaktionsgefäß gemischt und anschließend die Innentemperatur 1 Stunde bei 60 °C und weitere 2 Stunden bei 80-90 °C gehalten. Das so erhaltene Produkt hat ein berechnetes Epoxidäquivalent von 513. Die Viskosität des Produktes beträgt 70.200 mPas bei 25 °C.

### Beispiel 2

300 g (1,0 Val) Polyalkylenpolyetheramin gemäß Beispiel 1 und 522,0 g (3,0 Val) Bisphenol-A-Diglycidylether mit einem Epoxidäquivalent von 174 werden analog zu Beispiel 1 umgesetzt. Produktdaten: Berechnetes Epoxidäquivalent: 411; Viskosität: 45.110 mPas bei 25 °C.

### Beispiel 3

225 g (1,0 Val) Polyalkylenpolyetherdiamin mit Polyethylenoxid-Grundkette und mit einem mittleren Molekulargewicht von 900 (Jeffamine ® ED900) und 391,2 g (2,4 Val) Bisphenol-A-Diglycidylether mit einem Epoxidäquivalent von 163 werden analog zu Beispiel 1 umgesetzt Produktdaten: Berechnetes Epoxidäquivalent: 552; Viskosität: 1.340 mPas bei 52 °C.

### Beispiel 4

500 g (1,0 Val) Polyalkylenpolyethermonoamin auf Basis Ethylenoxid und mit einem mittleren Molekulargewicht von 1.000 (Jeffamine ® M1000) und 417,6 g (2,4 Val) Bisphenol-A-Diglycidylether mit einem Epoxidäquivalent von 174 werden analog zu Beispiel 1 umgesetzt. Produktdaten: Berechnetes Epoxidäquivalent: 655; Viskosität: 6.030 mPas bei 25 °C.

### Beispiel 5

500 g (1,0 Val) Polyalkylenpolyetherdiamin mit Polypropylenoxid-Grundkette und mit einem mittleren Molekulargewicht von 2.000 (Jeffamine ® D2000) und 391,2 g (2,4 Val) Bisphenol-A-Diglycidylether mit einem Epoxidäquivalent von 163 werden analog zu Beispiel 1 umgesetzt. Produktdaten: Berechnetes Epoxidäquivalent: 637; Viskosität: 39.630 mPas bei 52 °C.

### Beispiel 6

500 g (1,0 Val) Polyalkylenpolyetherdiamin mit Ethylenoxid-Grundkette und mit einem mittleren Molekulargewicht von 2.000 (Jeffamine ® ED 2001) und 391,2 g (Val) Bisphenol-A-Diglycidylether mit einem Epoxidäquivalent von 163 werden analog zu Beispiel 1 umgesetz. Produktdaten: Berechnetes Epoxidäquivalent: 637; Viskosität: 26.740 mPas bei 52 °C.

### Beispiel 7

500 g (1,0 Val) Polyalkylenpolyetherdiamin gemäß Beispiel 6 und 489,0 g (3,0 Val) Bisphenol-A-Diglycidylether mit einem Epoxidäquivalent von 163 werden analog Beispiel 1 umgesetzt. Produktdaten: Berechnetes Epoxidäquivalent: 495; Viskosität: 57.270 mPas bei 25 °C.

### Beispiel 8

225 g (1,0 Val) Polyalkylenpolyetherdiamin gemäß Beispiel 3 und 115,0 g (0,5 Val) p-(2,2-Dimethyl-propyl)phenol-glycidylether mit einem Epoxidäquivalent von 230 werden in einem Reaktionsgefäß gemischt und anschließend die Innentemperatur 1 Stunde bei 60 °C und weitere 2 Stunden bei 80-90 °C gehalten. Nach Abkühlen auf 40 °C versetzt man rasch mit 204,6 g (1,1 Val) Bisphenol-A-Diglycidylether mit einem Epoxidäquivalent von 186. Die Innentemperatur wird erneut 1 Stunde bei 60 °C und 2 Stunden bei 80 °C gehalten. Das so erhaltene Produkt hat ein berechnetes Epoxidäquivalent von 908. Die Viskosität beträgt 68.045 mPas bei 25 °C.

### Beispiel 9

47,8 g Reaktionsprodukt aus Beispiel 1 werden in einem Reaktionsgefäß mit 52,2 g Isophorondiamin gemischt und anschließend die Innentemperatur 1 Stunde bei 60 °C und weitere 2 Stunden bei 80-90 °C gehalten. Nach Abkühlen auf ca. 50 °C wird es mit Wasser verdünnt (Festkörperanteil 80 %) . Das so erhaltene Produkt hat ein berechnetes Aminäquivalent von 112. Die Viskosität des Produktes beträgt 3.430 mPas bei 25 °C.

### Beispiel 10

35,6 g Reaktionsprodukt aus Beispiel 7 werden in einem Reaktionsgefäß mit 64,4 g Isophorondiamin gemischt und anschließend die Innentemperatur 1 Stunde bei 60 °C und weitere 2 Stunden bei 80-90 °C gehalten. Nach Abkühlen auf ca. 50 °C wird es mit Wasser verdünnt (Festkörperanteil 80 %). Das so erhaltene Produkt hat ein berechnetes Aminäquivalent von 87, die Viskosität des Produktes beträgt 1.830 mPas bei 25 °C.

### Beispiel 11

48,4 g Reaktionsprodukt aus Beispiel 7 werden in einem Reaktionsgefäß mit 51,6 g Isophorondiamin gemischt und anschließend die Innentemperatur 1 Stunde bei 60 °C und weitere 2 Stunden bei 80-90 °C gehalten. Nach Abkühlen auf ca. 50 °C wird es mit Wasser verdünnt (Festkörperanteil 80 %). Das so erhaltene Produkt hat ein berechnetes Aminäquivalent von 108, die Viskosität des Produktes beträgt 1.970 mPas bei 25 °C.

### Beispiel 12

158,3 g Trimethylendiamin werden in einem Dreihalskolben vorgelegt. Bei 55-60 °C tropft man 53,1 g Acrylnitril zu. Anschließend wird die Innentemperatur 2 Stunden bei 60 °C gehalten. Nach Abkühlen auf 40 °C versetzt man rasch mit 193,6 g Reaktionsprodukt aus Beispiel 1 und hält die Innentemperatur 1 Stunde bei 60 °C und weitere 2 Stunden bei 80-90 °C. Nach Abkühlen auf ca. 50°C wird es mit Wasser verdünnt (Festkörperanteil 80 %). Das so erhaltene Produkt hat ein berechnetes Aminäquivalent von 192, die Viskosität des Produktes beträgt 1.860 mPas bei 25 °C.

### Beispiel 13

158,3 g Trimethylendiamin, 53,1 g Acrylnitril und 255,3 g Reaktionsprodukt aus Beispiel 3 werden analog zu Beispiel 12 umgesetzt und anschließend mit Wasser verdünnt (Feststoffanteil 80 %). Produktdaten: Berechnetes Aminäquivalent: 213; Viskosität 83.400 mPas bei 25 °C.

### Beispiel 14

158,3 g Trimethylendiamin, 53,1 g Acrylnitril und 122,6 Reaktionsprodukt aus Beispiel 4 werden analog zu Beispiel 12 umgesetzt und anschließend mit Wasser verdünnt (Feststoffanteil 80 %). Produktdaten: Berechnetes Aminäquivalent: 147; Viskosität 390 mPas bei 25 °C.

### Beispiel 15

158,3 g Trimethylendiamin, 53,1 g Acrylnitril und 116,9 g Reaktionsprodukt aus Beispiel 5 werden analog zu Beispiel 12 umgesetzt und anschließend mit Wasser verdünnt (Feststoffanteil 80 %). Produktdaten: Berechnetes Äquivalent: 145; Viskosität 3.030 mPas bei 25 °C.

### Beispiel 16

158,3 g Trimethylendiamin, 53,1 g Acrylnitril und 116,9 g Reaktionsprodukt aus Beispiel 6 werden analog zu Beispiel 12 umgesetzt und anschließend mit Wasser verdünnt (Feststoffanteil 80 %). Produktdaten: Berechnetes Aminäquivalent: 145; Viskosität 2.760 mPas bei 25 °C.

### Beispiel 17

158,3 g Trimethylendiamin, 53,1 g Acrylnitril und 198,5 g Reaktionsprodukt aus Beispiel 8 werden analog zu Beispiel 12 umgesetzt und anschließend mit Wasser verdünnt (Feststoffanteil 80 %). Produktdaten: Berechnetes Aminäquivalent: 200; Viskosität 1.380 mPas bei 25 °C.

### Beispiel 18

Herstellung der Epoxidharz-Emulsionen Folgende Epoxidharze werden eingesetzt:
A) Ein Epoxidharz auf Basis Bisphenol-A und Epichlorhydrin mit einem Epoxidäquivalent von ca. 186 und einer Viskosität von 9.700 mPas bei 25 °C.
B) Eine Mischung aus 80 Gew.-% eines Epoxidharzes auf der Basis von Bisphenol-A und Epichlorhydrin mit einem Epoxidäquivalent von ca. 186 und einer Viskosität von 9.700 mPas bei 25 °C und 20 Gew.-% eines Epoxidharzes auf der Basis von Versatic-Säure und Epichlorhydrin mit einem Epoxidäquivalent von 250 und einer Viskosität von 740 mPas bei 25 °C.

Je 100 g Epoxidharz A bzw. B werden mit Hilfe eines Rührers mit den erfindungsgemäßen Härtungsmitteln der Beispiel 9-17 entsprechend der folgenden Aufstellung emulgiert und mit Wasser auf einen Feststoffanteil von 60 % eingestellt.

**Tabelle:**

| Härtungsmittel pro 100 g Epoxidharz | | |
|---|---|---|
| Härtungsmittel gemäß Beispiel | Epoxidharz | |
| | A | B |
| 9 | 112 | 120 |
| 10 | 87 | --- |
| 11 | --- | 116 |
| 12 | 192 | --- |
| 13 | 203 | --- |
| 14 | 147 | --- |
| 15 | 145 | --- |
| 16 | 14 | --- |
| 17 | --- | 215 |

Die Emulsionen zeigen eine ausreichende Stabilität innerhalb der Verarbeitungszeit von 0,5-6,0 Stunden.

Die wässrigen Dispersionen werden unter Zuhilfenahme einer Rakel auf Glasplatten aufgetragen. Schichtstärken: 120 µm. Die so erhaltenen Filme zeigen eine gute Filmbildung, guten Filmverlauf und hohen Glanz.

**Tabelle:**

| Pendelhärten (nach König) 7-d-Werte | | | | | | | | |
|---|---|---|---|---|---|---|---|---|
| Mischung mit Härtungsmittel aus Beispiel | | | | | | | | |
| 9 | 10 | 11 | 12 | 13 | 14 | 15 | 16 | 17 |
| 199" | 76" | 187" | 53" | 74" | 81" | 69" | 46" | 162". |

### Beispiel 19

500 g (1 Val) Polyalkylenpolyetherdiamin gemäß Beispiel 5 und 92 g (0,5 Val) Phenol-Glycidylether mit einem Epoxidäquivalent von 185 und 185 g (1,0 Val) Bisphenol-A-Diglycidylether mit einem Epoxidäquivalent von 185 werden analog Beispiel 8 umgesetzt. Produktdaten: Berechnetes Epoxidäquivalent : 1.555. Die Viskosität bei 25 °C beträgt 5.720 mPa s.

### Beispiel 20

74,0 g Reaktionsprodukt aus Beispiel 19 und 26,0 g m-Xylylendiamin werden in einem Reaktionsgefäß gemischt und anschließend die Innentemperatur 1 Stunde bei 60 °C und weitere 2 Stunden bei 80 bis 90 °C gehalten. Produktdaten: Berechnetes Aminäquivalent: 141. Die Viskosität bei 25 °C beträgt 17.440 mPa s.

### Beispiel 21

61,0 g Reaktionsprodukt aus Beispiel 19 und 39,0 g 3,3'-Dimethyl-4,4'-diaminodicydohexyl-methan werden analog Beispiel 20 umgesetzt. Produktdaten: Berechnetes Aminäquivalent: 165. Die Viskosität bei 25 °C beträgt 84.010 mPa^{.}s.

### Beispiel 22

### Vergleichende Prüfungen

Folgende Harze wurden eingesetzt:
A) Ein Epoxidharz auf der Basis von Bisphenol-A und Epichlorhydrin mit einem Eopxidäquivalent von 185.
B) Ein Epoxidharz auf der Basis von Phenol und Epichlorhydrin mit einem Epoxidäquivalent von 185.

Harz-Härter-Mischungen:

| Mischung | I | II | III | IV |
|---|---|---|---|---|
| Harz A | 55,1 | 47,1 | 51,0 | 44,1 |
| Harz B | 13,1 | 10,3 | 12,7 | 9,7 |
| Jeffamine® D2000 | 19,8 | --- | 17,9 | --- |
| m-Xylylendiamin | 11,2 | 1,0 | --- | --- |
| 3,3'-Dimethyl-4,4'-diaminodicyclohexyl-methan | --- | --- | 18,4 | 0,9 |
| Härtungsmittel entspr. Bsp. 20 | --- | 41,6 | --- | --- |
| Härtungsmittel entspr. Bsp. 21 | --- | --- | --- | 45,3 |
| Pendelhärte (n. König) nach 24 h bei Raumtemeratur | 14 sec | 33 sec | --- | --- |
| Pendelhärte (n. König) nach 48 h bei 10 °C | 11 sec | 21 sec | --- | --- |
| Dehnung nach 7 h bei Raumtemperatur | 26 % | 39 % | --- | --- |
| Dehnung nach 2 h bei Raumtemperatur und 6 h bei 60 °C | --- | --- | 25% | 38% |

## Patentansprüche

1. Härtungsmittel für Epoxidverbindungen, hergestellt durch:
(1)) Umsetzung von Polyalkylenpolyethermonoaminen und/oder -diaminen und/oder -polyaminen mit einem mittleren Molekulargewicht von 148-5.000, mit Di- und/oder Polyepoxidverbindungen gegebenenfalls nach Reaktion oder in Abmischung mit Monoepoxidverbindungen, zu einem Vorprodukt, wobei das Verhältnis der gegebenenfalls nach Umsetzung mit Monoepoxidverbindungen verbliebenen an Stickstoff gebundenen Wasserstoffatome, die zur Reaktion mit Epoxidgruppen befähigt sind, zu Epoxidgruppen von Diepoxidverbindungen bzw. Polyepoxidverbindungen im Bereich von 1 : 1,4 bis 6 liegt,
(2) Umsetzung des Vorproduktes aus (1) mit einem primären oder sekundären aliphatischen, araliphatischen, cycloaliphatischen, aromatischen oder heterocyclischen Mono- und/oder Di- und/oder Polyamin, wobei das sekundäre Amin mindestens zwei sekundäre Aminogruppen hat und das eingesetzte Amin bzw. Amingemisch in einer solchen Menge verwendet wird, daß die zur Reaktion befähigten Epoxidgruppen zu den am Stickstoff befindlichen Wasserstoffatomen in einem Verhältnis von 1 : 2 bis 10 stehen.

2. Härtungsmittel nach Anspruch 1, **dadurch gekennzeichnet,** daß die eingesetzten Amine partiell umgesetzt sind mit zur Addition befähigten, ungesättigten Verbindungen, mit durch reduktive Aminierung der Amine durch Umsetzung mit Aldehyden bzw. Ketonen und einer sich anschließenden Hydrierung erhaltenen Verbindungen, mit Aldehyden bzw. Ketonen, mit Aldehyden (insbesondere Formaldehyd) und phenolischen Verbindungen oder mit Addukten von Aminen mit Epoxidgruppen enthaltenden Verbindungen.

3. Härtungsmittel nach Anspruch 1, **dadurch gekennzeichnet,** daß die Aminoendgruppen ganz oder teilweise umgesetzt sind mit zur Addition befähigten, ungesättigten Verbindungen, mit durch reduktive Aminierung der Amine durch Umsetzung mit Aldehyden bzw. Ketonen und einer sich anschließenden Hydrierung erhaltenen Verbindungen, mit Aldehyden bzw. Ketonen, mit Aldehyden (insbesondere Formaldehyd) und phenolischen Verbindungen oder mit Addukten von Aminen mit Epoxidgruppen enthaltenden Verbindungen.

4. Härtungsmittel nach den Ansprüchen 1-3, **dadurch gekennzeichnet,** daß sie in Wasser emulgiert sind.

5. Härtermischungen für Epoxidverbindungen, **dadurch gekennzeichnet,** daß sie Härtungsmittel nach den Ansprüchen 1 und 2 sowie übliche Aminhärter enthalten.

6. Härtermischungen nach Anspruch 5, **dadurch gekennzeichnet,** daß sie in Wasser emulgiert sind.

7. Verfahren zur Herstellung der Härtungsmittel nach den Ansprüchen 1-3, **dadurch gekennzeichnet,** daß im Temperaturbereich von 20-120 °C
(1) Polyalkylenpolyethermonoamine und/oder -diamine und/oder -polyamine mit einem mittleren Molekulargewicht von 148 bis 5000 mit Di- und/oder Polyepoxidverbindungen, gegebenenfalls nach Reaktion oder in Abmischung mit Monoepoxidverbindungen, zu einem Vorprodukt umgesetzt werden, wobei das Verhältnis der gegebenenfalls nach Umsetzung mit Monoepoxidverbindungen verbliebenen, an Stickstoff gebundenen Wasserstoffe, die zur Reaktion mit Epoxidgruppen befähigt sind, zu Epoxidgruppen von Diepoxidverbindungen bzw. Polyepoxidverbindungen im Bereich von 1 : 1,4 bis 6 liegt.
(2) das Vorprodukt aus (1) mit einem primären oder sekundären aliphatischen, araliphatischen, cycloaliphatischen, aromatischen oder heterocyclischen Mono- und/oder Di- und/oder Polyamin umgesetzt wird, wobei das sekundäre Amin mindestens zwei sekundäre Aminogruppen hat und das eingesetzte Amin in einer solchen Menge verwendet wird, daß die zur Reaktion befähigten Epoxidgruppen zu den am Stickstoff befindlichen Wasserstoffatomen in einem Verhältnis von 1 : 2 bis 10 stehen.

8. Verfahren nach Anspruch 7, **dadurch gekennzeichnet,** daß als Amine solche eingesetzt werden, die partiell umgesetzt sind mit zur Addition befähigten, ungesättigten Verbindungen, mit durch reduktive Aminierung der Amine durch Umsetzung mit Aldehyden bzw. Ketonen und einer sich anschließenden Hydrierung erhaltenen Verbindungen, mit Aldehyden bzw. Ketonen, mit Aldehyden (insbesondere Formaldehyd) und phenolischen Verbindungen oder mit Addukten von Aminen mit Epoxidgruppen enthaltenden Verbindungen.

9. Verfahren nach Anspruch 7, **dadurch gekennzeichnet,** daß die Aminoendgruppen der Härtungsmittel ganz oder teilweise umgesetzt werden mit zur Addition befähigten, ungesättigten Verbindungen, mit durch reduktive Aminierung der Amine durch Umsetzung mit Aldehyden bzw. Ketonen und einer sich anschließenden Hydrierung erhaltenen Verbindungen, mit Aldehyden bzw. Ketonen, mit Aldehyden (insbesondere Formaldehyd) und phenolischen Verbindungen oder mit Addukten von Aminen mit Epoxidgruppen enthaltenden Verbindungen.

10. Verfahren nach den Ansprüchen 7-9, **dadurch gekennzeichnet,** daß das Verhältnis der nach Umsetzung mit Monoepoxidverbindungen verbliebenen an Stickstoff gebundenen Wasserstoffe, die zur Reaktion mit Epoxidgruppen befähigt sind, zu Epoxidgruppen von Di- bzw. Polyepoxidverbindungen im Bereich von 1 : 2 bis 3 liegt.

11. Verfahren nach den Ansprüchen 7-10, **dadurch gekennzeichnet,** daß man als Diepoxidverbindung Polyphenolglycidylether einsetzt.

12. Verfahren nach den Ansprüchen 7-11, **dadurch gekennzeichnet,** daß die Umsetzungen (1) und(2) bei einer Temperatur im Bereich von 50-90 °C erfolgen.

13. Verwendung der Härtungsmittel bzw. Härtermischungen nach den Ansprüchen 1-6, zusammen mit einer oder mehreren Epoxidverbindungen und Wasser, zur Herstellung von Beschichtungen und Überzügen.

14. Verwendung der Härtungsmittel bzw. Härtermischungen nach den Ansprüchen 1-6, zusammen mit einer oder mehreren Epoxidverbindungen und Wasser, als Zusatzmittel für hydraulische Bindemittel.

15. Verwendung der Härtungsmittel bzw. Härtermischungen nach den Ansprüchen 1-6, zusammen mit einer oder mehreren Epoxidverbindungen zur Herstellung von Dicht- und Klebstoffen.

16. Verwendung der Härtungsmittel bzw. Härtermischungen nach den Ansprüchen 1-6, zusammen mit einer oder mehreren Epoxidverbindungen zur Herstellung von flexiblen Formteilen, Flächengebilden und Laminaten.

## Claims

1. A hardening agent for epoxy compounds, prepared by:
(1) reacting polyalkylenepolyethermonoamines and/or -diamines and/or -polyamines with an average molecular weight of from 148 to 5,000 with di- and/or polyepoxy compounds, if necessary after reaction or mixed with monoepoxy compounds, to form an initial product, the ratio of the hydrogen atoms - if necessary remaining after reaction with monoepoxy compounds and bonded to nitrogen and capable of reaction with epoxy groups - to epoxy groups of diepoxy compounds or polyepoxy compounds respectively lying in the range of 1 : 1.4 to 6,
(2) reacting the initial product from (1) with a primary or secondary aliphatic, araliphatic, cycloaliphatic, aromatic or heterocyclic mono- and/or di- and/or polyamine,whereas the secondary amine has at least two secondary amine groups and the amine or amine mixture introduced being used in a quantity such that the epoxy groups capable of reaction are in a ratio of 1:2 to 10 with the hydrogen atoms present on the nitrogen.

2. A hardening agent according to Claim 1, **characterized in that** the amines introduced are partially reacted with unsaturated compounds capable of addition, with compounds obtained by reductive amination of the amines by reaction with aldehydes or ketones respectively and a subsequent hydrogenation, with aldehydes or ketones respectively, with aldehydes (in particular formaldehyde) and phenol compounds or with adducts of amines with compounds containing epoxy groups.

3. A hardening agent according to Claim 1, **characterized in that** the amino end groups are completely or partially reacted with unsaturated compounds capable of addition, with compounds obtained by reductive amination of the amines by reaction with aldehydes or ketones respectively and a following hydrogenation, with aldehydes or ketones respectively, with aldehydes (in particular formaldehyde) and phenol compounds or with adducts of amines with compounds containing epoxy groups.

4. A hardening agent according to Claims 1 to 3, **characterized in that** they are emulsified in water.

5. Mixtures of hardeners for epoxy compounds, **characterized in that** they contain hardening agents according to Claims 1 and 2 as well as conventional amine hardeners.

6. Mixtures of hardeners according to Claim 5, **characterized in that** they are emulsified in water.

7. A process for preparing the hardening agents according to Claims 1 to 3, **characterized in that** in the temperature range of from 20 to 120°C
(1) polyalkylenepolyethermonoamines and/or -diamines and/or -polyamines with an average molecular weight of from 148 to 5,000 are reacted with di- and/or polyepoxy compounds, if necessary after reaction or mixed with monoepoxy compounds, to form an initial product, the ratio of the hydrogens [*sic*] - if necessary remaining after reaction with monoepoxy compounds and bonded to nitrogen and capable of reaction with epoxy groups - to epoxy groups of diepoxy compounds or polyepoxy compounds respectively lying in the range of 1 : 1.4 to 6,
(2) the initial product from (1) is reacted with a primary or secondary aliphatic, araliphatic, cycloaliphatic, aromatic or heterocyclic mono- and/or di- and/or polyamine, whereas the secondary amine has at least two secondary amine groups and the amine introduced being used in a quantity such that the epoxy groups capable of reaction are in a ratio of 1:2 to 10 with the hydrogen atoms present on the nitrogen.

8. A process according to Claim 7, **characterized in that** the amines introduced are those which are partially reacted with unsaturated compounds capable of addition, with compounds obtained by reductive amination of the amines by reaction with aldehydes or ketones respectively and a subsequent hydrogenation, with aldehydes or ketones respectively, with aldehydes (in particular formaldehyde) and phenol compounds or with adducts of amines with compounds containing epoxy groups.

9. A process according to Claim 7, **characterized in that** the amino end groups of the hardening agents are completely or partially reacted with unsaturated compounds capable of addition, with compounds obtained by reductive amination of the amines by reaction with aldehydes or ketones respectively and a following hydrogenation, with aldehydes or ketones respectively, with aldehydes (in particular formaldehyde) and phenol compounds or with adducts of amines with compounds containing epoxy groups.

10. A process according to Claims 7 to 9, **characterized in that** the ratio of the hydrogens [*sic*] - remaining after reaction with monoepoxy compounds and bonded to nitrogen and capable of reaction with epoxy groups - to epoxy groups of di- or polyepoxy compounds respectively lies in the range of 1 : 2 to 3.

11. A process according to Claims 7 to 10, **characterized in that** polyphenol glycidyl ether is used as the diepoxy compound.

12. A process according to Claims 7 to 11, **characterized in that** the reactions (1) and (2) take place at a temperature in the range of from 50 to 90°C.

13. Use of the hardening agents or hardener mixtures according to Claims 1 to 6, together with one or more epoxy compounds and water, for the production of coatings and coverings.

14. Use of the hardening agents or hardener mixtures according to Claims 1 to 6, together with one or more epoxy compounds and water, as additives for hydraulic binders.

15. Use of the hardening agents or hardener mixtures according to Claims 1 to 6, together with one or more epoxy compounds, for the production of seals and adhesives.

16. Use of the hardening agents or hardener mixtures according to Claims 1 to 6, together with one or more epoxy compounds, for the production of flexible moulded parts, flat shaped parts and laminates.

## Revendications

1. Durcisseurs pour composés époxydes obtenus
(1) par réaction de polyalkylènepolyéther mono- et/ ou di- et/ou polyamines d'un poids moléculaire moyen de 148 à 5000, avec des composés di- et/ou polyépoxydes, éventuellement après réaction ou coupage avec des composés monoépoxydes, en vue de l'obtention d'un produit intermédiaire, le rapport des atomes d'hydrogène liés à l'azote, subsistant éventuellement après réaction avec des composés monoépoxydes, qui sont susceptibles de réagir avec des groupes époxy, aux groupes époxy des composés diépoxydes ou des composés polyépoxydes se situant dans le domaine de 1:1,4 à 6,
(2) par réaction du produit intermédiaire issu de (1) avec une mono- et/ou di- et/ou polyamine primaire ou secondaire aliphatique, araliphatique, cycloaliphatique, aromatique ou hétérocyclique, l'amine secondaire ayant au moins deux groups amino secondaires et l'amine ou le mélange d'amines mis en oeuvre étant utilisé en une quantité telle que les groupes époxy aptes à la réaction par rapport aux atomes d'hydrogène se trouvant sur l'azote se situent dans un rapport de 1:2 à 10.

2. Durcisseurs selon la revendication 1, caractérisés en ce que les amines mises en oeuvre ont partiellement réagi avec des composés insaturés susceptibles d'une addition, avec des composés obtenus par aminatioon réductive des amines par réaction avec des aldéhydes ou des cétones et par une hydrogénation subséquente, avec des aldéhydes, respectivement des cétones, avec des aldéhydes (notamment du formaldéhyde) et des composés phénoliques ou avec des produits d'addition d'amines avec des composés porteurs de groupes époxy.

3. Durcisseurs selon la revendication 1, caractérisés en ce que les groupes amino terminaux ont totalement ou partiellement réagi avec des composés insaturés susceptibles d'une addition, avec des composés obtenus par amination réductive des amines par réaction avec des aldéhydes ou des cétones et par une hydrogénation subséquente, avec des aldéhydes, respectivement des cétones, avec des aldéhydes (notamment du formaldéhyde) et des composés phénoliques ou avec des produits d'addition d'amines avec des composés porteurs de groupes époxy.

4. Durcisseurs selon les revendications 1 à 3, caractérisés en ce qu'ils sont émulsionnés dans l'eau.

5. Mélanges de durcisseurs pour composés époxydes, caractérisés en ce qu'ils contiennent des durcisseurs selon les revendications 1 et 2, ainsi que les durciseurs aminés usuels.

6. Mélanges de durcisseurs selon la revendication 5, caractérisés en ce qu'ils sont émulsionnés dans l'eau.

7. Procédé pour la préparation des durcisseurs selon les revendications 1 à 3, caractérisé en ce que l'on fait réagir dans le domaine de température de 20 à 120°C
(1) des polyalkylénepolyéther mono- et/ou di- et/ou polyamines d'un poids moléculaire moyen de 48 à 5000, avec des composés di- et/ou polyépoxydes, éventuellement après réaction ou coupage avec des composés monoépoxydes, en vue de l'obtention d'un produit intermédiaire, le rapport des atomes d'hydrogène liés à l'azote, subsistant éventuellement après réaction avec des composés monoépoxydes, qui sont susceptibles de réagir avec des groupes époxy, aux groupes époxy des composés diépoxydes ou des composés polyépoxydes se situant dans le domaine de 1:1,4 à 6,
(2) le produit intermédiaire issu de (1) avec une mono- et/ou di- et/ou polyamine primaire ou secondaire aliphatique, araliphatique, cycloaliphatique, aromatique ou hétérocyclique, l'amine secondaire ayant au moins deux groups amino secondaires et l'amine ou le mélange d'amines mis en oeuvre étant utilisé en une quantité telle que les groupes époxy aptes à la réaction par rapport aux atomes d'hydrogène se trouvant sur l'azote se situent dans un rapport de 1:2 à 10.

8. Procédé selon la revendication 7, caractérisé en ce qu'on met en oeuvre en tant qu'amines celles ayant réagi en partie avec des composés insaturés susceptibles d'une addition, avec des composés obtenus par amination réductive des amines par réaction avec des aldéhydes ou des cétones et par une hydrogénation subséquente, avec des aldéhydes, respectivement des cétones, avec des aldéhydes (notamment du formaldéhyde) et des composés phénoliques ou avec des produits d'addition d'amines avec des composés porteurs de groupes époxy.

9. Procédé selon la revendication 7, caractérisé en ce que les groupes amino terminaux des durcisseurs sont mis à réagir en totalité ou en partie avec des composés insaturés susceptibles d'une addition, avec des composés obtenus par amination réductive des amines par réaction avec des aldéhydes ou des cétones et par une hydrogénation subséquente, avec des aldéhydes, respectivement des cétones, avec des aldéhydes (notamment du formaldéhyde) et des composés phénoliques ou avec des produits d'addition d'amines avec des composés porteurs de groupes époxy.

10. Procédé selon les revendications 7 à 9, caractérisé en ce que le rapport des atomes d'hydrogène liés à l'azote subsistant après réaction avec des composés monoépoxydes qui sont susceptibles de réagir avec des groupes époxy, aux groupes époxy des composés di-, respectivement polyépoxydes se situe dans la plage de 1:2 à 3

11. Procédé selon les revendications 7 à 10, caractérisé en ce qu'on met en oeuvre un polyphénol éther glycidique en tant que composé diépoxyde.

12. Procédé selon les revendications 7 à 11, caractérisé en ce que les réactions (1) et (2) ont lieu à une température comprise dans la gamme de 50 à 90°C.

13. Utilisation des durcisseurs ou mélanges de durcisseurs selon les revendications 1 à 6, conjointement avec un plusieurs composés époxydes et de l'eau, pour la préparation d'enduits et de revêtements.

14. Utilisation des durcisseurs ou mélanges de durcisseurs selon les revendications 1 à 6, conjointement avec un ou plusieurs composés époxydes et de l'eau, en tant qu'adjuvants pour liants hydrauliques.

15. Utilisation des durcisseurs ou mélanges de durcisseurs selon les revendications 1 à 6, conjointement avec un ou plusieurs composés époxydes et de l'eau, pour la préparation de produits d'étanchéité et d'hadésifs.

16. Utilisation des durcisseurs ou mélanges de durcisseurs selon les revendications 1 à 6, conjointement avec un ou plusieurs composés époxydes et de l'eau, pour la confection de pièces moulées souples, de structures planes et de stratifiés.
